Europäisches Patentamt

European Patent Office

Office européen des brevets

(11) Veröffentlichungsnummer: **0 219 642**
**A2**

# (12) EUROPÄISCHE PATENTANMELDUNG

(21) Anmeldenummer: 86111454.4

(22) Anmeldetag: 19.08.86

(51) Int. Cl.⁴: **G01L 9/00 , G01L 19/00**

Die Bezeichnung der Erfindung wurde geändert (Richtlinien für die Prüfung im EPA, A-III, 7.3).

(30) Priorität: 22.08.85 DE 3529948

(43) Veröffentlichungstag der Anmeldung:
29.04.87 Patentblatt 87/18

(84) Benannte Vertragsstaaten:
DE FR GB IT SE

(71) Anmelder: NORD MICRO Elektronik Feinmechanik AG
Victor-Slotosch-Strasse 20
D-6000 Frankfurt/Main 60(DE)

(72) Erfinder: Innerhofer, Günther
Rembrandtring
D-6054 Rodgau 1(DE)

(74) Vertreter: Seibert, Rudolf, Dipl.-Ing. et al
Anwaltsgemeinschaft Seibert, Winkelmeier
& Partner Tattenbachstrasse 9
D-8000 München 22(DE)

(54) Feuchtigkeitsausgleich einer Luftdruckmessanordnung.

(57) Die Erfindung bezieht sich auf eine Meßanordnung zum Messen des Luftdrucks mit Hilfe eines zu Eigenschwingungen anregbaren Drucksensors. Um den nicht vernachlässigbaren Einfluß der relativen Feuchtigkeit der hinsichtlich des Druckes zu messenden Luft zu eliminieren, wird vorgeschlagen, einen Feuchtesensor, vorzugsweise in Form eines Kondensators mit einem feuchteempfindlichen Polymer als Dieelektrikum einzusetzen und die ermittelten Druckwerte um den Einfluß der Feuchtigkeit zu bereinigen.

EP 0 219 642 A2

## Meßanordnung zum Messen des Luftdrucks, insbesondere zur Luftdatenerfassung im Flugzeug

Die vorliegende Erfindung bezieht sich auf eine Meßanordnung zum Messen des Luftdrucks gem. dem Oberbegriff des Patentanspruches 1. Die Meßanordnung ist im besonderen zur Luftdatenerfassung wie z.B. der Flughöhe, der Fluggeschwindigkeit u.a. geeignet.

Es ist bei Druckmessungen in Flugzeugen bekannt, den Einfluß des Druckes auf die Eigenschwingung eines Meßwandlers, z.B. eines Drucksensors in Form eines Zylinders dadurch auszuwerten und damit den Druck zu bestimmen, daß der Meßwandler zu Eigenschwingungen angeregt und die Frequenzänderung zur Bestimmung des Druckes ausgewertet wird. Dabei wird die Luft, deren Druck gemessen werden soll, einer Seite des Meßwandlers, also beispielsweise dem Inneren des Meßzylinders zugeführt, während auf der anderen Seite also bei einem zylindrischen Drucksensor ein definierter Vergleichsdruck, beispielsweise auch der Druck 0, vorhanden ist.

Anstelle eines in Form eines Hohlzylinders ausgebildeten Drucksensors dabei kann auch jeder andere, zu Eigenschwingungen fähiger Körper in Form eines Quaders, einer Lamelle, einer Scheibe usw. aus beliebigem elastischem Material, wie Stahl, Quarz oder dgl. eingesetzt werden, wenn nur dafür gesorgt ist, daß, wie ausgeführt, auf einer Seite der zu Schwingungen anzuregenden Fläche das Medium, also die Luft, dessen Druck gemessen werden soll, zugeführt werden kann, während auf der anderen Seite ein definierter und bekannter Druck, z.B. auch der Druck 0, vorhanden ist.

Der vorliegenden Erfindung geht die Erkenntnis voraus, daß die Frequenz der Eigenschwingungen des Drucksensors, also beispielsweise des Meßzylinders nicht nur abhängig vom Druck, der die oszillierende Membran, verspannt beeinflußt wird, sondern daß die Eigenfrequenz auch durch die Temperatur, aber auch durch die Luftfeuchtigkeit, verändert wird, da beide die Dichte des mitschwingenden Gases beeinflussen.

Bei genauen Druckmessungen wird die Gas-(Luft-)temperatur in jedem Drucksensor mitgemessen und für die Auswertung des tatsächlichen Druckes berücksichtigt, indem der Einfluß der Temperatur in den Rechner (Prozessor) einkalibriert wird.

Die Luftfeuchtigkeit, also der Wasserdampfgehalt der Luft hat an sich einen wesentlich geringeren Einfluß auf die Frequenzverschiebung als die Temperatur. Er ist aber für hochgenaue Druckbestimmungen, insbesondere bei hoher Luftfeuchtigkeit und hohen Temperaturen nicht vernachlässigbar. Er liegt in der Größenordnung der z.B. für Präzisionsdruckmeßgeräte (Höhenmesser) gerade noch zugelassenen Fehlergrenze, wodurch diese aber vollständig ausgeschöpft wird, so daß alle anderen Stör-und Fehlergrößen absolut ausgeschlossen werden müssen.

Aufgabe der Erfindung ist es eine Meßanordnung zum Messen des Luftdrucks, also einen Drucksensor so weiter zu entwickeln, daß der durch die Luftfeuchtigkeit hervorgerufene Fehler ausgeglichen bzw. vernachlässigbar klein wird.

Diese Aufgabe wird mit einer Meßanordnung mit den Merkmalen des Patentanspruches 1 gelöst. Vorteilhafte Weiterbildungen ergeben sich aus den Unteransprüchen.

Bei der Meßanordnung nach der Erfindung wird also, insbesondere im unmittelbaren Bereich der - schwingenden Teile, die Luftfeuchtigkeit beispielsweise mit Hilfe eines Feuchtemeßfühlers gemessen und bei der Auswertung der gemessenen Frequenzen entsprechend berücksichtigt. Hierzu wird der Einfluß der Luftfeuchtigkeit auf das Schwingungsverhalten des Drucksensors vorher ebenso wie der Einfluß der Temperatur einkalibriert.

Zur Erfassung der relativen Luftfeuchtigkeit wird gem. einer Weiterbildung des Erfindungsgedankens vorgeschlagen, ein kapazitives Meßprinzip einzusetzen. Der hierfür zu verwendende Kondensator sollte dabei in Dünnschichttechnik mit einer feuchteempfindlichen Polymerschicht als Dielektrikum verwendet werden. In die Polymerschicht diffundieren die Wassermoleküle der feuchten Luft ein und verändern die Dielektrizitätskonstante des Kondensators. Entsprechend der Feuchtigkeit der Umgebungsluft gibt die Polymerschicht die Wassermoleküle mit nahezu der gleichen Geschwindigkeit wie bei der Aufnahme wieder ab, so daß der Kapazitätswert des Kondensators der Luftfeuchtigkeit mit geringer Verzögerung folgt. Diese Verzögerung ist vernachlässigbar, da sich die Werte der Luftfeuchtigkeit in aller Regel selbst nur langsam ändern.

Kondensatoren für diesen Zweck sind bekannt und nicht Gegenstand dieser Erfindung. Sie sind robust und verschmutzungsunempfindlich und weisen die für die Zwecke der Erfindung notwendige hohe Lebensdauer auf. Dabei besteht zwischen der relativen Luftfeuchtigkeit und der Kapazität ein annähernd linearer Zusammenhang, so daß mit einer einfachen Oszillatorschaltung die sich aufgrund der Feuchtigkeit ändernde Kapazität unmittelbar in eine variable Frequenz umgesetzt werden kann, die dann einfach verarbeitet werden kann.

Einzelheiten der Meßanordnung nach der Erfindung werden im folgenden in Verbindung mit den anliegenden Zeichnungen erläutert. In den Zeichnungen zeigen:

Fig. 1 eine schematische Übersicht über die Verwendung einer Meßanordnung als Höhenmesser in einem Flugzeug,

Fig. 2 ein Blockschaltbild zur Erläuterung des Auswertevorgangs für die Luftdruckauswertung und

Fig. 3 eine vorteilhafte Modifikation der Auswerteanordnung analog dem Grundaufbau nach Fig. 2.

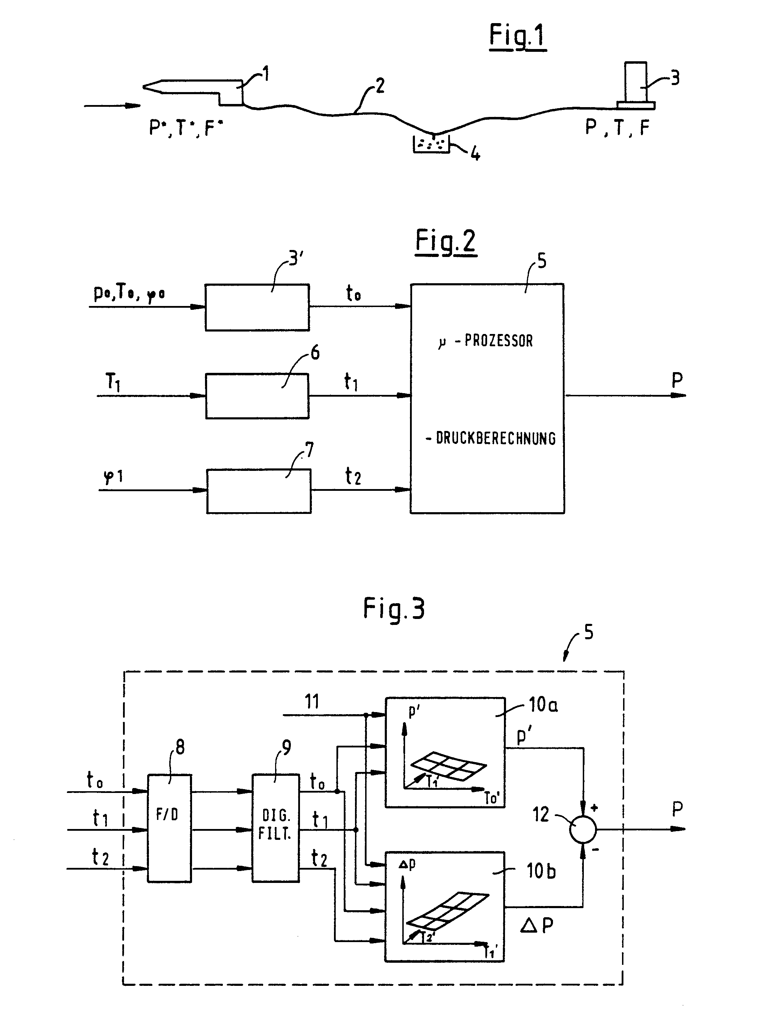

Bei Verwendung einer Druckmeßanordnung als Höhenmesser in einem Flugzeug, wird, wie in Fig. 1 dargestellt, an einem beliebigen Ort am Flugzeug die Luft mit dem zu messenden Druck über ein Staurohr 1 aufgenommen. Die Luft hat bei der Aufnahme beispielsweise den Druck P*, eine Temperatur T* und eine relative Luftfeuchtigkeit F*. Der Druck setzt sich dann über ein den Gegebenheiten des Flugzeuges angepaßtes Leitungssystem 2 fort bis in den Bereich des beispielsweise zylinderförmigen Drucksensors 3, wobei im Leitungszug ein Wasserabscheider 4 angeordnet sein kann. Im Bereich des Drucksensors 3 hat die Luft dann einen Druck P, der mit dem Eingangsdruck P* identisch ist, eine Temperatur T und eine relative Feuchtigkeit F. Diese Luftmasse beeinflußt druckabhängig die Eigenschwingung des Drucksensors 3 in bekannter Weise. Dabei kann beispielsweise die Temperatur der hinsichtlich des Druckes zu messenden Luft im Außenbereich, also vor dem Staurohr 1 zwischen -60° und + 60° schwanken, während im Inneren eine Temperatur bis zu + 100°C herrschen kann.

Bislang wurden im allgemeinen derartige Drucksensoren mit einer synthetischen Luft mit einer Taupunkttemperatur von -65°C kalibriert, was bedeutet, daß eine extrem trockene Luft eingesetzt wird, die bei 1.000 hPa einen absoluten, temperaturunabhängigen Wasserdampfanteil von 5,4 PPM - (Parts Per Million) aufweist.

Mit steigendem Wasserdampfanteil, dessen Molekulargewicht geringer ist als das von Luft, nimmt die Dichte der Luft ab. Dies bedeutet, daß die Schwingfrequenz des Sensors durch weniger mitschwingende feuchte Luftmasse höher wird, und daß dadurch bei der bisherigen Messung ein höherer Druck und damit bei der Auswertung als Flughöhe eine geringere Höhe angezeigt wird, als tatsächlich vorhanden ist.

Erfindungsgemäß werden nun am Drucksensor 3 die durch die mitschwingende Masse beeinflußte Eigenfrequenz sowie im Bereich des Drucksensors getrennt die Temperatur und die Feuchte gemessen. Diese drei Meßwerte werden dann, wie in Fig. 2 in einem Blockschaltbild gezeigt, einem Mikroprozessor (Rechner) 5 zugeführt, und zwar vom Vibrationszylinder 3' die abhängig von Druck, Temperatur und Feuchte beeinflußte Schwingungsfrequenz dieses Zylinders in Form der Periodendauer $t_0$, die von einer Temperaturschaltung 6 mit einem am Meßsensor angebrachten Temperaturdiode abgegebene Schwingung in Form der Periodendauer $t_1$ dieser Schwingung und die von einer Feuchteschaltung 7 mit einem Feuchtefühler abgegebene Schwingung in Form deren Periodendauer $t_2$.

In dem Mikroprozessor 5 sind die beim Kalibrieren der Meßanordnung gewonnenen Werte eingespeichert und aus der vom Meßsensor 3 abgeleiteten Frequenz wird nach Korrektur um den Einfluß von Temperatur und Feuchte der gemessene Druck P von dem Mikroprozessor abgegeben und entsprechend ausgewertet bzw. angezeigt.

Gem. einer einer vorteilhaften Weiterbildung des Erfindungsgedankens vorausgehenden Erkenntnis empfiehlt es sich, den Mikroprozessor so zu organisieren, daß die Korrektur um den durch die Feuchtigkeit hervorgerufenen Fehler ggf. abgeschaltet werden kann, und zwar sowohl bei einem Ausfall des Feuchtesensors, als auch bei Überschreiten vorgegebener Grenzwerte.

Dies wird im folgenden anhand der Fig. 3 erläutert. In dieser Fig. ist mit Blockschaltbildern der Aufbau des Mikroprozessors 5 dargestellt. Der Prozessor enthält dabei eingangsseitig zunächst einen Umsetzer 8, der die einzelnen Meßfrequenzen analog dem Schwingverhalten des Drucksensors 3 bzw. der gemessenen Temperatur und der Feuchte zu den einzelen Periodenzeiten $t_0$-$t_2$ in Digitalsignale umsetzt.

Im praktischen Betrieb genügt für die Umsetzung der drei Werte ggf. ein Umsetzer, der dann entsprechend im Zeitmultiplexbetrieb die einzelnen Werte nacheinander zyklisch umsetzt.

Die so gewonnenen Digitalwerte werden dann über ein Filter 9 den beiden Verarbeitungskreisen 10a und 10b zugeführt. Dabei ermittelt der Verarbeitungskreis 10a dem vorher über den Eingang 11 die notwendigen Kalibrierdaten eingegeben wurden, abhängig von den Signalen vom Drucksensor und der Temperaturmessung, die zu den Zeiten $t_0$ und $t_1$ anliegen, den um den Einfluß der Temperatur bereinigten Druck P', während im Verarbeitungskreis 10 b die von der Luftfeuchtigkeit abhängige Druckdifferenz $\Delta P$ ermittelt wird. Hierzu benötigt der Verarbeitungskreis 10b sowohl die Signale von Drucksensor, als auch die der Temperaturmessung und Feuchtemessung. Diesem Verabeitungskreis werden dementsprechend diese drei Werte zugeführt. Auch diesen Kreis waren die Kalibrierdaten über einen Eingang 11 entsprechend zugeführt worden.

Im Verknüpfungskreis 12 wird dann aus dem Druck P' und dem Differenzdruck $\Delta P$ der tatsächliche vom Einfluß der Temperatur und der Feuchte berichtigte Druck ermittelt und entsprechend weiter gegeben. Der Verknüpfungskreis 12 ist dabei so programmiert, daß bei Überschreiten des Wertes Δ P bzw. bei Ausfall dieses Wertes, weil der Feuchtesensor nicht angesprochen hatte, der vom Auswertekreis 10 a ermittelte Wert P' unmittelbar weiter gegeben wird, um eine zusätzliche Fehlerkomponente mit Sicherheit auszuschließen.

Der Aufbau der einzelnen Sensoren ist nicht Gegenstand dieser Erfindung. Für die Zwecke der Erfindung können sowohl die verschiedensten Temperaturmeßgeräte, also beispielsweise nicht nur eine temperaturabhängige Diode sowie auch die verschiedensten Sensoren zur Messung der Feuchtigkeit herangezogen werden. Allerdings eignet sich für den Zweck der Erfindung nicht zuletzt auch wegen der geringen Trägheit und dem einfachen Aufbau ein Kondensator mit einer feuchteempfindlichen Polymerschicht als Dielektrikum, weil hierduch die Feuchtigkeit in einfacher Weise in eine Frequenzänderung umgesetzt und dann ausgewertet werden kann. Ein derartiger Kondensator kann in sehr einfacher Weise unmittelbar mit den für die Schwingungserregung-bzw. -abnahme notwendigen Systemen baulich kombiniert werden.

**Ansprüche**

1. Meßanordnung zum Messen des Luftdruckes, insbesondere zur Luftdatenerfassung im Flugzeug unter Verwendung eines zu Eigenschwingungen anregbaren vorzugsweise zylinderförmigen Drucksensors der einseitig mit der Atmosphäre, deren Druck gemessen werden soll, beaufschlagt wird, während auf der anderen Seite ein definierter Druck, z.B. der Druck 0 vorhanden ist, wobei die Schwingungsfrequenz abgetastet und in einer Auswerteschaltung ggfs. unter Berücksichtigung des Einflusses der Temperatur ausgewertet wird, dadurch gekennzeichnet, daß weiter ein Feuchtesensor vorgesehen ist zur Erfassung der relativen Feuchtigkeit der den Drucksensor beaufschlagenden Atmosphäre.

2. Meßanordnung nach Anspruch 1, bei Verwendung eines Schwingzylinders als Drucksensor, dem die Atmosphäre, deren Druck gemessen werden soll, im Innern zugeführt wird, während außen ein definierter Druck, z.B. der Druck 0, vorhanden ist, dadurch gekennzeichnet, daß der Feuchtesensor und vorzugsweise auch der Temperatursensor im Innern des Schwingzylinders angeordnet sind.

3. Meßanordnung nach Anspruch 2, dadurch gekennzeichnet, daß der Feuchte-und ggfs, auch der Temperatursensor baulich mit dem Schwingungsanregungs-bzw. abnahmesystem verbunden sind.

4. Meßanordnung nach Anspruch 1, gekennzeichnet durch die Verwendung eines kapazitiven Feuchtesensors in Dünnschichttechnik mit einer fechteempfindlichen Polymerschicht.

5. Meßanordnung nach Anspruch 1, dadurch gekennzeichnet, daß die einzelnen Meßwerte - (Frequenz, Temperatur, relative Feuchte) zur Ermittlung des Druckes einem Mikroprozessor zugeführt werden, in welchem zur Ermittlung des tatsächlichen Druckes eine Verarbeitung der Meßwerte abhängig von eingegebenen Kalibrierdaten erfolgt.

6. Meßanordnung nach Anspruch 5, dadurch gekennzeichnet, daß innerhalb des Mikroprozessors parallel zum einen der um den Einfluß der Temperatur bereinigte Druck und zum anderen der um Temperatur und um den Einfluß der relativen Feuchtigkeit bereinigte Druck ermittelt werden und daß eine Verknüpfung vorgesehen ist, die bei Ausfall des Feuchtesensors oder bei Ermittlung der gemessenen Feuchtigkeit außerhalb eines vorgegebenen Bereiches die Weitergabe des nur um die Temperaturwerte bereinigten Druckwertes freigibt.

7. Meßanordnung nach Anspruch 6, dadurch gekennzeichnet, daß der die relative Luftfeuchtigkeit berücksichtigenden Auswerteweg nur das durch die Luftfeuchtigkeit bedingte Inkrement des um den Temperatureinfluß bereinigten Druckwertes ermittelt, das zu diesem mittels der Verknüpfungsschaltung addiert wird.

8. Meßanordnung nach Anspruch 1, dadurch gekennzeichnet, daß für die Berechnung des feuchteabhängigen Druckkorrekturwertes eine Kalibration nach Druck und Temperatur mit einer Luft von konstantem Taupunkt ausreicht, wenn einmalig die Feuchte bzw. Gasdichteempfindlichkeit für Sensoren gleichen Aufbaus bestimmt wurde.

Fig.1

Fig.2

Fig.3